# EUROPEAN PATENT SPECIFICATION

(11) **EP 1 069 156 B1**
(45) Date of publication and mention of the grant of the patent: **08.10.2003**
(21) Application number: 00202418.0
(22) Date of filing: 07.07.2000
(51) Int. Cl.: C08K 5/523, C08L 69/00

(54) **Flame retardant thermoplastic resin composition**
Flammhemmende thermoplastische Harzzusammensetzung
Composition ignifuge de résine thermoplastique

(30) Priority: 12.07.1999 KR 9928080
(43) Date of publication of application: 17.01.2001
(73) Proprietor: Cheil Industries Inc., Euiwang-shi, Kyoungki-Do (KR)
(72) Inventor: Lim, Jong Cheol, Kwachon-shi,Kyongki-do (KR); Kwon, Ick Hwan, Youngdongpu-Gu, Seoul (KR); Lee, Je Heun, Yangchun-Gu, Seoul (KR)
(74) Representative: Prins, Adrianus Willem

(56) References cited:
- EP-A- 0 869 150
- EP-A- 0 909 790

## Description

### BACKGROUND OF THE INVENTION

The present invention relates to flame retardant polycarbonate-based thermoplastic resin composition with improved flame retardency and mechanical properties that is useful for the electric and electronic products housings. More particularly, the present invention relates to a polycarbonate-based thermoplastic resin composition which comprises a polycarbonate, a rubber modified styrene graft copolymer, a styrene copolymer, a compatibilizing agent, the phosphate compounds and a fluorinated polyolefin.

### 2. Description of the Prior Art

Polycarbonate molding compositions are widely used for the parts of electrical products and automotive components as having excellent transparency, high impact strength, and flame retardant properties. However, having poor processability during molding process, polycarbonate resins are usually used by blending with other kinds of resins. For example, molding compositions comprising a polycarbonate resin and a styrene-containing copolymer have good processability as well as high-notched impact strength. However, when the above molding compositions are exposed at an elevated temperature during a molding or extrusion processing, the phase size (domain size) of the component forming the dispersed phase (domain) may become larger, and moreover such a phenomenon occurs frequently when the viscosity of the resin forming the continuous phase, matrix, is lowered. The larger the phase size of the component forming the dispersed phase becomes, the lower the mechanical property of the molding composition is rapidly.

Furthermore, the polycarbonate molding compositions used for parts of home appliances and computers should have particularly high flame resistance to prevent fire as well as the mechanical properties. For this purpose, halogen and/or antimony containing compounds have been used to render flame retardant property to thermoplastic molding compositions. In U.S. Patent No. 4,983,658 and 4,883,835, a halogen-containing compound is used as a flame retardant. The halogen-containing compound, however, is fatally harmful due to the toxic gases generated during combustion, and therefore nowadays the halogen-free resin compositions are used widely.

As to a common composition without the halogen compound to render the flame resistance, it illustrates the composition using the phosphate typically. For example, U.S. Pat. No. 4,248,976 discloses fire retardant compositions of aromatic polymers, such as styrene polymers and copolymers, aromatic polyesters, polycarbonates and polyphenylene oxides, which is achieved by adding a mixture of (a) a phosphorus compound and (b) a compound of formula R(CH₂X)n, wherein R is an aromatic or heterocyclic residue, X is a leaving group and n is at least 2. However, the styrene resins are weak in flame retardency, comparing to the polycarbonate resins, which requires increasing an amount of the fire retardant, in order to obtain some level of flame retardency. But, increasing an amount of the phosphorus compound as a fire retardant makes the heat resistance be lowered rapidly, thereby being inadequate for applying to the computer housing. And also, lowering the viscosity of the matrix resin might result in phase aggregation of the dispersion resin, and the enlarged dispersion phase of the styrene resin is acted as a source of fuel at the time of firing, which leads the rapid increase of the combustion time and then becomes a cause of loss of the uniformed flame retardency.

The flame retardant resin compositions prepared an aromatic polycarbonate resin, styrene containing copolymer or grafted copolymer together with the monomeric phosphate, oligomeric phosphate or the mixture thereof as flame retardants are disclosed in the U.S. Patent Nos. 5,061,745, 5,204,394, 5,672,645, etc. However, these inventions are accompanied by deficiency in uniformity of the flame retardency (increased combustion time), together with unsatisfactory mechanical property of the molded parts when exposed to the elevated temperature during molding process.

U.S. Patent No. 5,292,786 discloses a resin composition consisting of polycarbonate resin, ABS resin, phosphates as flame retardants and polyalkyl methacrylate resin with improvement of weld-line strength. However, this patent did not disclose a decline of flame retardency or impact strength, due to coalescence of the resin. Moreover, it appears that a resin composition comprising polyalkyl methacrylate more than an adequate amount results in a problem of a fall of flame retardency.

In view of the foregoing circumstances, the inventors of the present invention have formulated various thermoplastic resin compositions and carried out extensive studies on their thermal stability, flame retardency, impact strength, heat resistance, processability, appearance, and found that a resin composition comprising of polycarbonate resin, rubber modified styrene graft copolymer, styrene copolymer, phosphorus compound and fluorinated polyolefins with an addition of the compatibilizing agent thereto has a well-balance of the physical properties such as an improved thermal stability, flame retardency, impact strength, heat resistance, processability, and good appearance, leading to completion of the present invention.

### SUMMARY OF THE INVENTION

An object of the invention is to provide a flame retardant thermoplastic resin composition which has not shown a retarded combustion time and a decline of the mechanical physical property of the molded product during processing at an elevated temperature, which comprise a polycarbonate, a rubber modified styrene graft copolymer, styrene copolymer, compatibilizing agent, phosphorus compound and fluorinated polyolefin.

Another object the invention is to provide a flame retardant thermoplastic resin composition with good combination of no juicing phenomenon, stress crack resistance, heat resistance, thermal stability, good processability, and appearance.

The present invention provides flame retardant thermoplastic molding composition comprises
(A) 45 to 99 parts by weight of a thermoplastic polycarbonate;
(B) 1 to 50 parts by weight of a styrene graft polymer prepared by graft polymerizing
   (B-1) 5 to 95 parts by weight of a mixture of
      (B-1.1) 50 to 95 parts by weight of styrene, α-methylstyrene, halogen or methyl ring-substituted styrene, or a mixture thereof and
      (B-1.2) 5 to 50 parts by weight of acrylonitrile, methacrylonitrile, C₁-C₈ alkyl methacrylates, C₁-C₈ alkyl acrylate, maleic anhydride, C₁-C₄ alkyl or phenyl N-substituted maleimides or a mixture thereof, onto
   (B-2) 5 to 95 parts by weight of a polymer selected from a group consisting of butadiene rubbers, acryl rubbers, ethylene/propylene rubbers, styrene/butadiene rubbers, acrylonitrile/butadiene rubbers, isoprene rubbers, EPDM rubbers, polyorganosiloxane derivatives, and mixture thereof.
(C) 0.5 to 50 parts by weight of a styrene copolymer or mixture thereof prepared from
   (C-1) 50 to 95 parts by weight of styrene, α-methylstyrene, halogen or alkylsubstituted styrenes, or a mixture thereof and
   (C-2) 50 to 5 parts by weight of acrylonitrile, methacrylonitrile, C₁-C₈ alkyl methacrylates, C₁- C₈ alkyl acrylates, maleic anhydride, N-substituted maleimides or a mixture thereof,
(D) 0.5 to 30 parts by weight of the compatibilizing agent according to claim 1,
(E) 0.5 to 20 parts by weight, based on 100 parts by weight of (A)+(B)+(C), of phosphate compound represented by the following formula (I) or mixture of phosphate esters 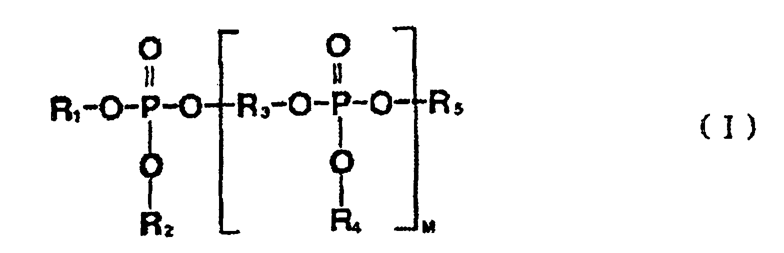 wherein, R₁, R₂, R₄, and R₅ are the same or different from each other and each independently represents C₆-C₂₀ aryl or alkyl substituted C₆-C₂₀ aryl, R₃ is C₆-C₃₀ aryl or alkyl substituted C₆-C₃₀ aryl derivatives, and M represents a number of average degree of polymerization, and the average value thereof is 0 to 5.
(F) 0.5 to 5 parts by weight, based on 100 parts by weight of (A)+(B)+(C), of fluorinated polyolefin resin with an average particle size of 0.05 to 1000 µm and density of 2.0 to 2.3 g/cm³.

### DEESCRIPTION OF THE PREFERRED EMBODIMENTS

### (A) Thermoplastic Polycarbonate

Suitable component (A) thermoplastic, aromatic polycarbonates to be used in the invention are generally prepared by reacting diphenols represented by the following formula (II) with phosgene, a halogen formate or a carbonic diester, 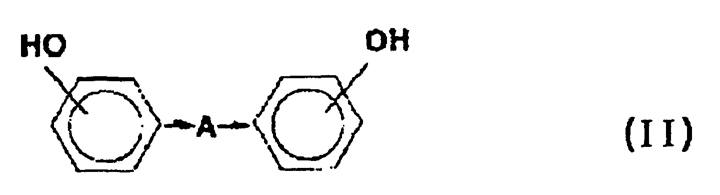 wherein, A represents a single bond, C₁-C₅ alkylene, C₂-C₆ alkylidene, C₅-C₆ cycloalkylidene, -S- or -SO₂-.

Specific examples of diphenols of the formula (II) include hydroquinone, resorcinol, 4,4'-dihydroxydiphenyl, 2,2-bis-(4-hydroxyphenyl) propane, 2,4-bis-(4-hydroxyphenyl)-2-methyl-butane, 1,1-bis-(4-hydroxyphenyl)-cyclohexane, 2,2-bis-(3-chloro-4-hydroxyphenyl) propane, 2,2-bis-(3,5-dibromo-4-hydroxyphenyl)propane. Among them, 2,2-bis-(4-hydroxyphenyl)propane, 2,2-bis-(3,5-dichloro-4-hydroxyphenyl)propane and 1,1-bis-(4-hydroxyphenyl)-cyclohexane are preferred. The most preferred and widely used aromatic polycarbonates are prepared from bisphenol-A, and 2,2-bis-(4-hydroxyphenyl)propane.

As the suitable polycarbonates (A) to be incorporated into the present invention, it is ones having average molecular weights, Mw, of 10,000 to 200,000, preferably of 15,000 to 80,000.

Suitable polycarbonates (A) incorporated into the composition of the invention may be branched in a known manner, in particular preferably by incorporation 0.05 to 2 mol %, based to total quantity of diphenols used, of tri- or higher functional compounds, for example, those with three or more phenolic groups.

Both homopolycarbonates and copolycarbonates are illustrated as suitable polycarbonates for the present invention. Component A may also be a blend of the thermoplastic polycarbonates specified above.

The polycarbonates (A) may be partially or entirely replaced with aromatic polyester-carbonates which are obtained by performing the polymerization reaction in the presence of an ester precursor, for example, a difunctional carboxylic acid.

### (B) Rubber modified styrene graft copolymer

The graft copolymers to be used in the present invention are those prepared from the following monomer units
(B-1) 5 to 95 parts by weight, based on (B), of a mixture of
   (B-1.1) 50 to 95 parts by weight of styrene, α-methylstyrene, halogen or alkyl ring-substituted styrene, or a mixture thereof, and
   (B-1.2) 5 to 50 parts by weight of acrylonitrile, methacrylonitrile, C₁-C₈ alkyl methacrylates, C₁-C₈ alkyl acrylate, maleic anhydride, C₁-C₄ alkyl or phenyl N-substituted maleimides or a mixture thereof onto
(B-2) 5 to 95 parts by weight of a polymer selected from a group consisting of butadiene rubbers, acryl rubbers, ethylene/propylene rubbers, styrene/butadiene rubbers, acrylonitrile/butadiene rubbers, isoprene rubbers, EPDM rubbers, polyorganosiloxane derivatives, and a mixture thereof. C₁-C₈ alkyl acrylates or C₁-C₈ alkyl methacrylates are the esters of acrylic or methacrylic acids respectively with monohydric alcohols with 1 to 8 carbon atoms. Specific examples include methyl methacrylate, ethyl methacrylate and propyl methacrylate. Among them, methyl methacrylate is particularly preferred.

Preferred examples of the graft polymers (B) include polybutadienes, butadiene/styrene copolymers and acryl rubbers grafted with styrene and/or acrylonitrile and/or (meth)acrylic acid alkyl esters. Of these, ABS graft polymers are particularly preferred for the polymers (B).

The preferred average particle size of the rubber(B.2) is 0.05 to 4 µm in order to improve the impact strength and surface of the moldings.

The graft copolymers of components (B) may be prepared according to the conventional methods in the art of preparation of the graft copolymers, in particular, emulsion, suspension, solution or bulk polymerization. Preferred method for preparing the graft copolymer (B) is emulsion or bulk polymerization.

### (C) Styrene Copolymer

The component (C) vinyl copolymers to be used in the present invention are those prepared from
(C-1) 50 to 95 parts by weight of styrene, α-methylstyrene, halogen or alkylsubstituted styrenes, or a mixture thereof, and
(C-2) 50 to 5 parts by weight of acrylonitrile, methacrylonitrile, C₁-C₈ alkyl methacrylates, C₁-C₈ alkyl acrylates, maleic anhydride, C₁-C₄ alkyl or phenyl N-substituted maleimides or a mixture thereof.

C₁-C₈ alkyl acrylates or C₁-C₈ alkyl methacrylates are the esters of acrylic or methacrylic acids respectively with monohydric alcohols with 1 to 8 carbon atoms. Specific examples include methyl methacrylate, ethyl methacrylate and propyl methacrylate. Among them, methyl methacrylate is particularly preferred.

The copolymers of component (C) may be often produced as by-products in the graft polymerization during production of component (B), particularly when a large quantity of monomers is grafted onto a small quantity of rubber. The quantity of copolymer (C) to be used in accordance with the present invention does not include these graft polymerization by-product.

The component (C) copolymers are resinous thermoplastic material, and they do not contain rubber.

Preferred copolymers (C) are those prepared from styrene with acrylonitrile and optionally methyl methacrylate, from α-methylstyrene with acrylonitrile and optionally methyl methacrylate or from styrene and α-methylstyrene with acrylonitrile and optionally methyl methacrylate. The component (C) styrene/acrylonitrile copolymers are materials known per se and may be prepared, for examples, by free-radical polymerization, in particular by emulsion, suspension, solution or bulk polymerization. The preferable component (C) copolymers are illustrated as those having weight average molecular weights (Mw) of between 15,000 and 200,000.

Another preferred copolymers (C) to be incorporated into the composition of the invention are random copolymers of styrene and maleic anhydride, which may be produced from the corresponding monomers by continuous bulk or solution polymerization. The proportions of the two components in the suitable random styrene-maleic anhydride copolymers may be varied within a wide range. The preferred maleic anhydride content is between 5 and 55 wt.%. The molecular weights (number average, Mn) of the suitable component (C) random styrene-maleic anhydride copolymers may vary over a wide range. A range of 60,000 to 200,000 is preferred. An intrinsic viscosity of 0.3 to 0.9 is preferred for these products.

Instead of styrene, the vinyl copolymers (C) may also contain ring-substituted styrenes such as p-methylstyrene, vinyltoluene, 2,4-dimethylstyrene, and other substituted styrenes such as α-methylstyrene.

The vinyl copolymers mentioned in the above can be used alone or in admixture with two or more vinyl copolymers.

### (D) Compatibilizing agent

The compatibilizing agent to be incorporated to the present invention is used for improving compatibility of polycarbonate resin(A) and styrene graft copolymer(B) and/or styrene copolymer(C). As a compatibilizing agent (compatilizer) for the flame retardant thermoplastic resin composition of the present invention, the following (D-2) to (D-4) can be used alone or in admixture with two or more.
(D-2) Acrylate graft copolymer prepared by graft polymerization of 5 to 95 parts by weight of C₁-C₈ alkyl methacrylates, C₁-C₈ alkyl acrylates or a mixture thereof onto 95 to 5 parts by weight of a polymer selected from a group consisting of butadiene rubbers, acryl rubbers, ethylene/propylene rubbers, styrene/butadiene rubbers, acrylonitrile/butadiene rubbers, isoprene rubbers, EPDM rubbers, polyorganosiloxane derivatives, and a mixture thereof.
(D-3) Graft copolymer prepared from branching onto the main chain of 5 to 95 parts by weight of polycarbonate resin by 5 to 95 parts by weight of monomeric mixture comprising 50 to 95 parts by weight of styrene, α-methylstyrene, halogen or methyl ring-substituted styrenes, C₁-C₈ alkyl methacrylates, C₁-C₈ alkyl acrylates or a mixture thereof and 50 to 5 parts by weight of acrylonitrile, methacrylonitrile, C₁-C₈ alkyl methacrylates, C₁-C₈ alkyl acrylates, maleic anhydride, C₁-C₄ alkyl or phenyl N-substituted maleimides, or a mixture thereof;
(D-4) Graft copolymer prepared from branching on the main chain of 5 to 95 parts by weight of copolymer comprising 50 to 95 parts by weight of styrene, α-methylstyrene, halogen or methyl ring-substituted styrenes, C₁-C₈ alkyl methacrylates, C₁-C₈ alkyl acrylates or a mixture thereof and 50 to 5 parts by weight of acrylonitrile, methacrylonitrile, C₁-C₈ alkyl methacrylates, C₁-C₈ alkyl acrylates, maleic anhydride, C₁-C₄ alkyl or phenyl N-substituted maleimides and a mixture thereof, by 5 to 95 parts by weight of polycarbonate resin; or

### (E) Phosphate esters

The component (E) of the present invention is a mixture of polyphosphates wherein each component is represented by formula (I), which is disclosed in the Japanese Patent Laid-Open Publication No. 202,240/1984: 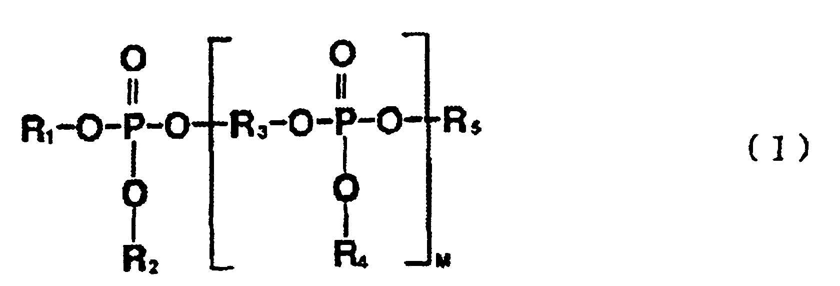 wherein, R₁, R₂, R₄, and R₅ are the same or different from each other and each independently represents C₆-C₂₀ aryl or alkyl substituted C₆-C₂₀ aryl, R₃ is C₆-C₃₀ aryl or alkyl substituted C₆-C₃₀ aryl derivatives, and M represents a number of average degree of polymerization, and the average value thereof is 0 to 5.

Specific examples of R₁, R₂, R₄, and R₅ include a phenyl group or a phenyl group which is substituted by an alkyl group such as tert-butyl, isopropyl, isobutyl, isoamyl, tert-amyl, etc.

The compound of formula (I) used in the present invention is oligomeric phosphate compound, which is derived from C₆-C₃₀ aryl or alkyl substituted C₆-C₃₀ aryl group. The preferred C₆-C₃₀ aryl or alkyl substituted C₆-C₃₀ aryl group includes resorcinol, hydroquinone, and bisphenol-A. That is to say, the flame retardant component (E) is an aryl derived oligomeric phosphate whose M value is 0 to 5. In the present invention, the phosphate having a M value of 0, 1, 2, 3, 4, and 5 is used alone or a mixture thereof, which is prepared in the course of polymerization, or which is formulated with independent phosphates having the different M values.

Phosphate having M value of 0 used in the present invention includes tri(alkylphenyl)phosphate, di(alkylphenyl)monophenylphosphate, triphenylmono(alkyl-phenyl)phosphate or triphenylphosphate, which can be used alone or in admixture with other two or more phosphate preferably.

### (F) Fluorinated polyolefins

Examples of fluorinated polyolefins used in the present invention include polytetrafluoroethylene, polyvinylidene fluoride, tetrafluoroethylene/vinylidene fluoride copolymer, tetrafluoroethylene/hexafluoropropylene copolymer and ethylene/tetrafluoroethylene copolymers. The said fluorinated polyolefins may be used alone or in admixture with other two or more fluorinated polyolefins.

The fluorinated polyolefin decreases the melt flow of the flameproof thermoplastic resin during combustion by forming a fibrillary network in the resin and increases shrinkage of the resin, thereby preventing dripping of the melted resin during combustion.

These fluorinated polymers may be produced using known processes, for example, by polymerization of tetrafluoroethylene in an aqueous medium with a free radical forming catalyst, for example sodium, potassium or ammonium peroxydisulphate at pressures of 7 to 71 kgf/cm² and at temperatures of 0°C to 200°C, preferably at temperatures of 20°C to 100°C.

The fluorinated polyolefins may be used in powder form or in emulsion form. Fluorinated polyolefins of emulsion state show a good dispersion, but make the preparation process complicated. Therefore, it is desirable to use powder state fluorinated polyolefins that can be dispersed evenly in the total resins to form a fibrillary network.

The fluorinated polyolefins suitable for the present invention is tetrafluoroethylene polymers with average particle sizes of 0.05 to 1000 µm and densities of 2.0 g/cm³ to 2.3 g/cm³.

An amount of the fluorinated polyolefins to be blended in the composition is 0.05 to 5.0 part by weight, based on 100 parts by weight of the basic resin (A)+(B)+(C).

In addition to the above-mentioned components, the thermoplastic molding composition according to the invention may further contain the conventional additives such as lubricants and mold release agents, nucleating agents, antistatic agents, stabilizers, fillers and reinforcing materials, together with dyes and pigments. The amount of fillers or reinforced molding compounds to be incorporated may contain up to 60 parts, preferably 10 to 40 parts by weight based on 100 parts by weight of the basic resin (A)+(B)+(C).

The thermoplastic resin compositions can be prepared according to the conventional techniques of preparation of resin compositions, for example, by mixing together the constituents including the various additives and melt-extruding within the extruders in pellet form.

The molding composition according to the present invention may be used to produce moldings of any kind. The molding composition is particularly suitable for the production of electric and electronic products housings, for example, computer casing parts, which are required to exhibit particularly high-notched impact strength and stress cracking resistance.

### EXAMPLES

The present invention may be better understood by reference to the following examples that are intended for the purpose of illustration and are not to be construed as in any way limiting the scope of the present invention, which is defined in the claims appended hereto.

### (A) Polycarbonate

Bisphenol A based polycarbonate with an average molecular weight(Mw) of 20,000 was used.

### (B) Rubber Modified Graft Copolymer

45 parts by weight of polybutadiene latex, 36 parts by weight of styrene, 14 parts by weight of acrylonitrile, and 150 parts by weight of deionized water were mixed, and 1.0 parts by weight of potassium oleate, 0.4 parts by weight of cumene hydroperoxide, and 0.3 parts by weight of mercaptan-based chain transfer agent were added to the mixed solution. The resulting solution was maintained at 75 °C for 5 hours to prepare a ABS graft copolymer latex. To the resulting graft copolymer, 1% sulfuric acid solution was added to prepare graft copolymer in powder form.

### (C) Styrene copolymer

To a mixture of 70 parts by weight of styrene, 30 parts by weight of acrylonitrile and 120 parts by weight of deionized water, 0.2 parts by weight of azobisisobutyronitrile and 0.5 parts by weight of tricalcium phosphate were added. SAN copolymer was prepared by suspension polymerization, and subsequently by washing, dehydrating and drying the resultant product. SAN copolymer in powder form was obtained.

### (D) Compatibilizing agent

(D-3) Modiper C H430 (brand name of NOF Corporation, Japan), a kind of PC-g-SAN, which is prepared from graft copolymerization of styrene and acrylonitrile monomer on the main chain of the polycarbonate resin.

(D-2) EXL-2603 (brand name of Kureha Chemical Industry Co., Ltd, Japan), a kind of acrylate graft copolymer, which is prepared from graft copolymerization of monomer onto butadiene rubber.

(D-5) Secondary amine modified styrene copolymer prepared from graft copolymerization in a molten state by adding 1.5 parts by weight of 1-(2-aminoethyl)piperazine to 100 parts by weight of SAMNA terpolymer. The terpolymer was prepared from 70 parts by weight of styrene, 30 parts by weight of acrylonitrile, 1 parts by weight of maleic anhydride and 0.02 parts by weight of azobisisobutyronitrile in 500 parts by weight of benzene by solution polymerization to obtain the copolymer, by precipitating the resulted copolymer in n-hexane, and then drying it.

### (E) A mixture of phosphate esters

(E-1) Bisphenol-A type polyphosphate
   As bisphenol-A type polyphosphate oligomer with an average value of M of 1.08, consisting of 1.8 parts by weight of M= 0, 82.3 parts by weight of M=1, 13.1 parts by weight of M=2, 2.3 parts by weight of M=3, and 0.4 parts by weight of M=4, in the compound of formula (I), DVP-506 (bland name of FMC) was used in the examples.
(E-2) Resorcinol derived polyphosphate
   As resorcinol derived polyphosphate oligomer with an average value of M of 1.21, consisting of 2.5 parts by weight of M= 0, 67.7 parts by weight of M=1, 21.6 parts by weight of M=2, 21.6 parts by weight of M=3, and 1.5 parts by weight of M=4, in the compound of formula (I), CR-733S (bland name of Daihachi Chemical Industry Co., Ltd., Japan) was used in the examples.
(E-3) As monomeric phosphate ester, triphenylphosphate (TPP) was used.

### (F) Fluorinated Polyolefin

Teflon(trademark) 7AJ of Dupont, Inc. of U.S.A. was used.

### Examples 1 to 5 and Comparative Examples 1 and 2

The thermoplastic resin compositions of Example 1 to 5 and comparative example I and 2 were prepared from the above-mentioned constituents in the amount as shown in the following Table 1 and the properties of the compositions were also shown in Table 1.

In the examples 1 to 4, the thermoplastic resin compositions were extruded so that weight ratios of polycarbonate resin/graft copolymer/styrene polymer become 80/10/10 and in the example 5, becomes 70/15/15. The comparative example A relates to the composition which does not contain the compatibilizing agent in the example 1 to 4, and the comparative B relates to that which does not contain the compatibilizing agent in the example 5.

All the components were mixed with an antioxidant and thermal stabilizer, and extruded in a twin-screw extruder(L/D=35, φ =45). The resulting extrudates were pelletized and the test specimens for mechanical properties were produced using an 10 oz injection molding machine at the temperature of 270°C and with cooling time of 5 minutes. The specimens were left at 23 °C, under the relative humidity of 50% for 40 hours and then were tested in accordance with ASTM. The test specimens for fire retardency were produced using an 10 oz injection molding machine at the temperature 250°C.

**Table 1**

| | | Example | | | | | Comparative Example | |
|---|---|---|---|---|---|---|---|---|
| | | 1 | 2 | 3 comparative | 4 | 5 | 1 | 2 |
| (A) Polycarbonate | | 73 | 80 | 80 | 73 | 63 | 80 | 70 |
| (B) Styrene graft copolymer | | 10 | 5 | 10 | 10 | 15 | 10 | 15 |
| (C) Styrene copolymer | | 7 | 10 | 5 | 7 | 12 | 10 | 15 |
| (D-3) PC-g-SAN copolymer | | 10 | - | - | 10 | 10 | - | - |
| (D-2) Acrylate Graft copolymer | | - | 5 | - | - | - | - | - |
| (D-5) Amine modified styrene copolymer | | - | - | 5 | - | - | - | - |
| (E) Phosphate esters | (E-1) | 10 | 10 | 10 | - | 10 | 10 | 10 |
| | (E-2) | - | - | - | 10 | - | - | - |
| | (E-3) | 2 | 2 | 2 | 2 | 3 | 2 | 3 |
| (F) Fluorinated Polyolefin | | 0.4 | 0.4 | 0.4 | 0.4 | 0.4 | 0.4 | 0.4 |
| Average M value of phosphate ester | | .75 | 0.75 | 0.75 | 0.87 | 0.65 | 0.75 | 0.65 |
| UL94⁽¹⁾(1/16") | | V-0 | V-0 | V-0 | V-0 | V-0 | V-0 | V-2 |
| Average combustion time(sec) | | 2.0 | 2.2 | 2.1 | 1.9 | 2.7 | 3.2 | 6.9 |
| Maximum combustion time among samples (sec) | | 4 | 5 | 5 | 4 | 6 | 10 | 21 |
| Bleeding out | | 0/5 | 0/5 | 0/5 | 0/5 | 0/5 | 0/5 | 2/5 |
| Izod Impact Strength⁽²⁾ (1/8", kg cm/cm) | | 43 | 45 | 45 | 38 | 40 | 12 | 14 |
| Heat resistance ⁽³⁾(VST, °C) | | 92 | 91 | 91 | 90 | 85 | 92 | 84 |

| | | | | | | | | |
|---|---|---|---|---|---|---|---|---|
| Notes: (1) UL 94 (1/16") was tested according to UL 94 VB. | | | | | | | | |
| (2) Izod Impact Strength was tested according to ASTM D256. | | | | | | | | |
| (3) Heat Resistance was tested according to ASTM D306. | | | | | | | | |

It may be seen from Table 1 that when to incorporate the compatibilizer into the composition, all specimens showed the V-0 grade, regardless of the amount of polycarbonate content. However, when not to incorporate the compatibilizer into the composition, the specimen with lower content of polycarbonate does not show the V-0 grade, and even if the specimen with higher content of polycarbonate showed the V-0 grade, but the combustion time was lengthened due to uneven combustion time. Moreover, when the injection molding process is effected at the elevated temperature, the impact strength of the composition using the compatibilizing agent shows the excellent property, whereas the composition which does not comprise the compatibilizing agent shows the great fall of the impact strength.

## Claims

1. Flame retardant, thermoplastic molding composition which comprises
(A) 45 to 99 parts by weight of a thermoplastic polycarbonate;
(B) 1 to 50 parts by weight of a styrene graft polymer prepared by graft polymerizing
(B-1) 5 to 95 parts by weight of a mixture of
(B-1.1) 50 to 95 parts by weight of styrene, α-methylstyrene, halogen or methyl ring-substituted styrene, or a mixture thereof and
(B-1.2) 5 to 50 parts by weight of acrylonitrile, methacrylonitrile, C₁-C₈ alkyl methacrylates, C₁-C₈ alkyl acrylate, maleic anhydride, C₁-C₄ alkyl or phenyl N-substituted maleimides or a mixture thereof, onto
(B-2) 5 to 95 parts by weight of a polymer selected from a group consisting of butadiene rubbers, acryl rubbers, ethylene/propylene rubbers, styrene/butadiene rubbers, acrylonitrile/butadiene rubbers, isoprene rubbers, EPDM rubbers, polyorganosiloxane derivatives, and mixture thereof.
(C) 0.5 to 50 parts by weight of a styrene copolymer or mixture thereof prepared from
(C-1) 50 to 95 parts by weight of styrene, α-methylstyrene, halogen or alkylsubstituted styrenes, or a mixture thereof and
(C-2) 50 to 5 parts by weight of acrylonitrile, methacrylonitrile, C₁-C₈ alkyl methacrylates, C₁- C₈ alkyl acrylates, maleic anhydride, N-substituted maleimides or a mixture thereof,
(D) 0.5 to 30 parts by weight of the compatibilizing agent, which is at least one selected from the group of consisting of
(D-2) Acrylate graft copolymer prepared by graft polymerization of 5 to 95 parts by weight of C₁-C₈ alkyl methacrylates, C₁-C₈ alkyl acrylates or a mixture thereof onto 95 to 5 parts by weight of a polymer selected from a group consisting of butadiene rubbers, acryl rubbers, ethylene/propylene rubbers, styrene/butadiene rubbers, acrylonitrile/butadiene rubbers, isoprene rubbers, EPDM rubbers, polyorganosiloxane derivatives, and a mixture thereof.
(D-3) Graft copolymer prepared from branching onto the main chain of 5 to 95 parts by weight of polycarbonate resin by 5 to 95 parts by weight of monomeric mixture comprising 50 to 95 parts by weight of styrene, α-methylstyrene, halogen or methyl ring-substituted styrenes, C₁-C₈ alkyl methacrylates, C₁-C₈ alkyl acrylates or a mixture thereof and 50 to 5 parts by weight of acrylonitrile, methacrylonitrile, C₁-C₈ alkyl methacrylates, C₁-C₈ alkyl acrylates, maleic anhydride, C₁-C₄ alkyl or phenyl N-substituted maleimides, or a mixture thereof; and
(D-4) Graft copolymer prepared from branching on the main chain of 5 to 95 parts by weight of copolymer comprising 50 to 95 parts by weight of styrene, α-methylstyrene, halogen or methyl ring-substituted styrenes, C₁-C₈ alkyl methacrylates, C₁-C₈ alkyl acrylates or a mixture thereof and 50 to 5 parts by weight of acrylonitrile, methacrylonitrile, C₁-C₈ alkyl methacrylates, C₁-C₈ alkylacrylates, maleic anhydride, C₁-C₄ alkyl or phenyl N-substituted maleimides and a mixture thereof, by 5 to 95 parts by weight of polycarbonate resin;
(E) 0.5 to 20 parts by weight, based on 100 parts by weight of (A)+(B)+(C), of phosphate compound represented by the following formula (I) or mixture of phosphate esters 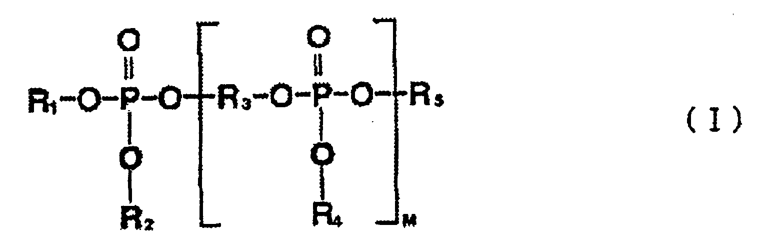 wherein, R₁, R₂, R₄, and R₅ are the same or different from each other and each independently represents C₆-C₂₀ aryl or alkyl substituted C₆-C₂₀ aryl, R₃ is C₆-C₃₀ aryl or alkyl substituted C₆-C₃₀ aryl derivatives, and M represents a number of average degree of polymerization , and the average value thereof is 0 to 5.
(F) 0.5 to 5 parts by weight, based on 100 parts by weight of (A)+(B)+(C), of fluorinated polyolefin resin with an average particle size of 0.05 to 1000 µm and density of 2.0 to 2.3 g/cm³.

2. Flame retardant thermoplastic molding composition according to claim 1, wherein the component (D) is at least one selected from the group consisting of
(D-2) Acrylate graft copolymer,
(D-3) polycarbonate grafted with SAN and
(D-4) SAN grafted with polycarbonate

3. Flame retardant thermoplastic molding composition according to claim 1, wherein said component (E) is mixture of phosphates represented by the formula (I) with M value of 0,1, 2, 3, 4 or 5.

4. Flame retardant thermoplastic molding composition according to claim 1, wherein said component (E) is a mixture of phosphates represented by the formula (I), which is prepared during the process thereof or formulated with each compound, and has average M value of 0 to 5.

5. Flame retardant thermoplastic molding composition according to claim 1, wherein the R₁, R₂, R₄, and R₅ of component (E) are phenyl group or alkyl substituted phenyl group.

6. Flame retardant thermoplastic molding composition according to claim 5, wherein the substituted alkyl group in R₁, R₂, R₄, and R₅ of component (E) is t-butyl or isopropyl group .

7. Flame retardant thermoplastic molding composition according to claim 1, wherein said resin composition further includes at least one additives selected from the group consisting of inorganic fillers, glass fibers, carbon fibers, thermal stabilizers, antioxidants, light stabilizers, plasticizers, dyes, pigments, lubricants and mold release agents, fillers, nucleating agents and antistatic agents.

8. Articles formed from flame retardant, thermoplastic molding composition as claimed in claim 1.

## Patentansprüche

1. Flammenhemmende thermoplastische Formzusammensetzung mit
(A) 45 bis 99 Masseteilen eines thermoplastischen Polycarbonats;
(B) 1 bis 50 Masseteilen eines Styren-Pfropfpolymers, das durch Pfropfpolymerisation von
(B-1) 5 bis 95 Masseteilen eines Gemisches aus
(B-1.1) 50 b is 95 M asseteilen S tyren, α-Methylstyren, H alogen- o der Methylring-substitutiertem Styren, oder einem Gemisch daraus und
(B-1.2) 5 bis 50 Masseteilen Acrylnitril, Methacrylnitril, C₁-C₈-Alkyl-Methacrylaten, C₁-C₈-Alkyl-Acrylaten, Maleinsäureanhydrid, C₁-C₄-Alkyl- oder Phenyl-N-substituierten Maleimiden oder einem Gemisch daraus auf
(B-2) 5 bis 95 Masseteile eines Polymers, das aus einer Gruppe bestehend aus Butadienkautschuken, Acrylkautschuken, Ethylen/Propylen-Kautschuken, Styren/Butadien-Kautschuken, Acrylnitril/Butadien-Kautschuken, Isoprenkautschuken, EPDM-Kautschuken, Polyorganosiloxan-Derivaten und einem Gemisch daraus gewählt ist, hergestellt wird;
(C) 0,5 bis 50 Masseteilen eines Styren-Copolymers oder eines Gemisches davon, das aus
(C-1) 50 bis 95 Masseteilen Styren, α-Methylstyren, Halogen- oder Alkylsubstitutierten Styrenen oder einem Gemisch aus diesen
und
(C-2) 50 bis 5 Masseteilen Acrylnitril, Methacrylnitril, C₁-C₈-Alkyl-Methacrylaten, C₁-C₈-Alkyl-Acrylaten, Maleinsäureanhydrid, N-substituierten Maleimiden, oder einem Gemisch daraus
hergestellt wird;
(D) 0,5 bis 30 Masseteilen eines Kompatibilisierungsagens, das mindestens ein Element aus der aus folgenden Elementen bestehenden Gruppe ist:
(D-2) Acrylat-Pfropfcopolymer, das durch Pfropfpolymerisation aus 5 bis 95 Masseteilen C₁-C₈-Alkyl-Methacrylaten, C₁-C₈-Alkyl-Acrylaten oder einem Gemisch daraus auf 95 bis 5 Mässeteile eines Polymers hergestellt wird, das aus einer Gruppe gewählt ist, die aus Butadienkautschuken, Acrylkautschuken, Ethylen/Propylen-Kautschuken, Styren/Butadien-Kautschuken, Acrylnitril/Butadien-Kautschuken, Isoprenkautschuken, EPDM-Kautschuken, Polyorganosiloxan-Derivaten, und einem Gemisch aus diesen besteht,
(D-3) Pfropfcopolymer, hergestellt durch Verzweigen von 5 bis 95 Masseteilen eines Polycarbonatharzes an der Hauptkette mittels 5 bis 95 Masseteilen eines Monomerengemisches, das 50 bis 95 Masseteile Styren, α-Methylstyren, Halogen- oder Methylring-substitutierte Styrene, C₁-C₈-Alkyl-Methacrylate, C₁-C₈-Alkyl-Acrylate oder ein Gemisch daraus und 50 bis 5 Masseteile Acrylnitril, Methacrylnitril, C₁-C₈-Alkyl-Methacrylate, C₁-C₈-Alkyl-Acrylate, Maleinsäureanhydrid, C₁-C₄-Alkyl- oder Phenyl-N-substituierte Maleimide oder ein Gemisch daraus aufweist, und
(D-4) Pfropfcopolymer, hergestellt durch Verzweigen von 5 bis 95 Masseteilen eines Copolymers an der Hauptkette, das 50 bis 95 Masseteile Styren, α-Methylstyren, Halogen- oder Methylring-substitutierte Styrene, C₁-C₈-Alkyl-Methacrylate, C₁-C₈-Alkyl-Acrylate oder ein Gemisch daraus und 50 bis 5 Masseteile Acrylnitril, Methacrylnitril, C₁-C₈-Alkyl-Methacrylate, C₁-C₈-Alkyl-Acrylate, Maleinsäureanhydrid, C₁-C₄-Alkyl- oder Phenyl-N-substituierte Maleimide und ein Gemisch daraus aufweist, mittels 5 bis 95 Masseteilen eines Polycarbonatharzes;
(E) 0,5 bis 20 Masseteilen, bezogen auf 100 Masseteile (A) + (B) + (C), einer Phosphatverbindung, die durch die folgende Formel (I) dargestellt ist, oder eines Gemisches aus Phosphatestern 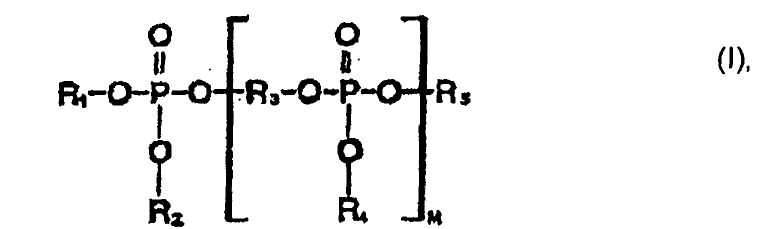 worin R₁, R₂, R₄ und R₅ gleich oder unterschiedlich sind und jeweils unabhängig C₆-C₂₀-Aryl oder Alkyl-substituiertes C₆-C₂₀-Aryl darstellen, R₃ für C₆-C₃₀-Aryl oder für ein Alkyl-substituiertes C₆-C₃₀-Arylderivat steht und M die Zahl des mittleren Polymerisationsgrades darstellt, wobei der Mittelwert 0 bis 5 ist; und
(F) 0,5 bis 5 Masseteilen, bezogen auf 100 Masseteile (A) + (B) + (C), fluoriertes Polyolefinharz mit einer mittleren Teilchengröße von 0,05 bis 1000 µm und einer Dichte von 2,0 bis 2,3 g/cm³.

2. Flammenhemmende thermoplastische Formzusammensetzung nach Anspruch 1, worin die Komponente (D) mindestens ein Element ist, das aus der aus folgenden Elementen bestehenden Gruppe gewählt ist:
(D-2) Acrylat-Pfropfcopolymer,
(D-3) mit SAN gepfropftes Polycarbonat und
(D-4) mit Polycarbonat gepfropftes SAN.

3. Flammenhemmende thermoplastische Formzusammensetzung nach Anspruch 1, worin die Komponente (E) ein Gemisch aus durch die Formel (I) dargestellten Phosphaten mit einem Wert M von 0, 1, 2, 3, 4 oder 5 ist.

4. Flammenhemmende thermoplastische Formzusammensetzung nach Anspruch 1, worin die Komponente (E) ein Gemisch aus durch die Formel (I) dargestellten Phosphaten ist, das im Zuge des Produktionsverfahrens hergestellt oder mit jeder Verbindung formuliert wird und einen mittleren Wert M von 0 bis 5 hat.

5. Flammenhemmende thermoplastische Formzusammensetzung nach Anspruch 1, worin R₁, R₂, R₄ und R₅ der Komponente (E) Phenylgruppen oder Alkyl-substituierte Phenylgruppen sind.

6. Flammenhemmende thermoplastische Formzusammensetzung nach Anspruch 5, worin die substituierte Alkylgruppe in R₁, R₂, R₄ und R₅ der Komponente (E) eine t-Butyloder Isopropylgruppe ist.

7. Flammenhemmende thermoplastische Formzusammensetzung nach Anspruch 1, worin die Harzzusammensetzung weiterhin mindestens einen Zusatzstoff aufweist, der aus der aus anorganischen Füllstoffen, Glasfasern, Kohlenstofffasern, thermischen Stabilisatoren, Antioxidanzien, Lichtstabilisatoren, Weichmachern, Farbstoffen, Pigmenten, Gleit- u nd E ntformungsmitteln, F üllstoffen, Keimbildnem u nd Antistatikmitteln b estehenden Gruppe gewählt ist.

8. Artikel, die aus der flammenhemmenden thermoplastischen Formzusammensetzung nach Anspruch 1 geformt werden.

## Revendications

1. Composition de moulage thermoplastique ignifuge qui comprend
(A) 45 à 99 parties en poids d'un polycarbonate thermoplastique ;
(B) 1 à 50 parties en poids d'un polymère greffé de styrène préparé par polymérisation par greffage
(B-1) de 5 à 95 parties en poids d'un mélange de
(B-1.1) 50 à 95 parties en poids de styrène, α-méthylstyrène, styrène substitué sur cycle par halogène ou méthyle, ou l'un de leurs mélanges
et
(B-1.2) 5 à 50 parties en poids d'acrylonitrile, méthacrylonitrile, méthacrylates d'alkyle en C₁ à C₈, acrylate d'alkyle en C₁ à C₈, anhydride maléique, maléimides N-substitués par alkyle en C₁ à C₄ ou phényle ou l'un de leurs mélanges, sur
(B-2) 5 à 95 parties en poids d'un polymère choisi dans le groupe constitué des caoutchoucs de butadiène, caoutchoucs acryliques, caoutchoucs d'éthylène/propylène, caoutchoucs de styrène/butadiène, caoutchoucs d'acrylonitrile/butadiène, caoutchoucs d'isoprène, caoutchoucs d'EPDM, dérivés de polyorganosiloxane et leurs mélanges ;
(C) 0,5 à 50 parties en poids d'un copolymère de styrène ou un mélange de celui-ci préparé à partir de
(C-1) 50 à 95 parties en poids de styrène, α-méthylstyrène, styrènes substitués par halogène ou alkyle ou l'un de leurs mélanges
et
(C-2) 50 à 5 parties en poids d'acrylonitrile, méthacrylonitrile, méthacrylates d'alkyle en C₁ à C₈, acrylates d'alkyle en C₁ à C₈, anhydride maléique, maléimides N-substitués ou l'un de leurs mélanges,
(D) 0,5 à 30 parties en poids d'un agent de compatibilité, qui est au moins l'un choisi dans le groupe constitué de
(D-2) copolymère greffé d'acrylate préparé par polymérisation par greffage de 5 à 95 parties en poids de méthacrylates d'alkyle en C₁ à C₈, acrylates d'alkyle en C₁ à C₈ ou l'un de leurs mélanges sur 95 à 5 parties en poids d'un polymère choisi dans le groupe constitué des caoutchoucs de butadiène, caoutchoucs acryliques, caoutchoucs d'éthylène/propylène, caoutchoucs de styrène/butadiène, caoutchoucs d'acrylonitrile/butadiène, caoutchoucs d'isoprène, caoutchoucs d'EPDM, dérivés de polyorganosiloxane et l'un de leurs mélanges,
(D-3) copolymère greffé préparé à partir de ramification sur la chaîne principale de 5 à 95 parties en poids de résine polycarbonate par 5 à 95 parties en poids de mélange monomère comprenant 50 à 95 parties en poids de styrène, α-méthylstyrène, styrène substitué sur cycle par halogène ou méthyle, méthacrylates d'alkyle en C₁ à C₈, acrylates d'alkyle en C₁ à C₈ ou l'un de leurs mélanges et 50 à 5 parties en poids d'acrylonitrile, méthacrylonitrile, méthacrylates d'alkyle en Ci à C₈, acrylates d'alkyle en C₁ à C₈, anhydride maléique, maléimides N-substitués par alkyle en C₁ à C₄ ou phényle, ou l'un de leurs mélangés ; et
(D-4) copolymère greffé préparé à partir de ramification sur la chaîne principale de 5 à 95 parties en poids d'un copolymère comprenant 50 à 95 parties en poids de styrène, α-méthylstyrène, styrènes substitués sur cycle par halogène ou méthyle, méthacrylates d'alkyle en C₁ à C₈, acrylates d'alkyle en C₁ à C₈ ou l'un de leurs mélanges et 50 à 5 parties en poids d'acrylonitrile, méthacrylonitrile, méthacrylates d'alkyle en C₁ à C₈, acrylates d'alkyle en C₁ à C₈, anhydride maléique, maléimides N-substitués par alkyle en C₁ à C₄ ou phényle et l'un de leurs mélanges, par 5 à 95 parties en poids de résine polycarbonate ;
(E) 0,5 à 20 parties en poids, sur la base de 100 parties en poids de (A) + (B) + (C), de composé phosphate représenté par la formule suivante (I) ou un mélange de phosphate esters 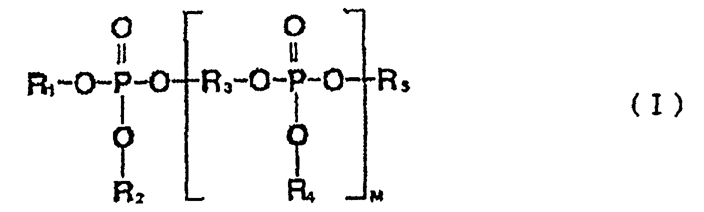 dans laquelle R₁, R₂, R₄ et R₅ sont identiques ou différents les uns des autres et représentent chacun indépendamment un groupe aryle en C₆ à C₂₀ substitué par aryle en C₆ à C₂₀ ou alkyle, R₃ est un dérivé aryle en C₆ à C₃₀ substitué par aryle en C₆ à C₃₀ ou alkyle, et M représente un nombre de degré moyen de polymérisation, et la valeur moyenne de celui-ci est de 0 à 5 ;
(F) 0,5 à 5 parties en poids, sur la base de 100 parties en poids de (A) + (B) + (C), de résine polyoléfine fluorée avec une taille de particule moyenne de 0,5 à 1000 µm et une densité de 2,0 à 2,3 g/cm³.

2. Composition de moulage thermoplastique ignifuge selon la revendication 1, dans laquelle le composant (D) est au moins un choisi dans le groupe constitué de
(D-2) copolymère greffé d'acrylate,
(D-3) polycarbonate greffé par SAN et
(D-4) SAN greffé par polycarbonate.

3. Composition de moulage thermoplastique ignifuge selon la revendication 1, dans laquelle ledit composant (E) est un mélange de phosphates représentés par la formule (I) avec une valeur de M de 0, 1, 2, 3, 4 ou 5.

4. Composition de moulage thermoplastique ignifuge selon la revendication 1, dans laquelle ledit composant (E) est un mélange de phosphates représentés par la formule (I), qui est préparé pendant son procédé ou formulé avec chaque composé, et a une valeur de M moyenne de 0 à 5.

5. Composition de moulage thermoplastique ignifuge selon la revendication 1, dans laquelle les R₁, R₂, R₄ et R₅ du composant (E) sont un groupe phényle ou un groupe phényle substitué par alkyle.

6. Composition de moulage thermoplastique ignifuge selon la revendication 5, dans laquelle le groupe alkyle substitué dans R₁, R₂, R₄ et R₅ du composant (E) est un groupe t-butyle ou isopropyle.

7. Composition de moulage thermoplastique ignifuge selon la revendication 1, dans laquelle ladite composition de résine comprend, en outre, au moins un additif choisi dans le groupe constitué des charges inorganiques, fibres de verre, fibres de carbone, stabilisants thermiques, antioxydants, photostabilisants, plastifiants, colorants, pigments, lubrifiants et agents de démoulage, charges, agents de nucléation et agents antistatiques.

8. Articles formés à partir de la composition de moulage thermoplastique ignifuge selon la revendication 1.
